# EUROPEAN PATENT SPECIFICATION

(11) **EP 2 314 891 B1**
(45) Date of publication and mention of the grant of the patent: **16.05.2012**
(21) Application number: 10013523.5
(22) Date of filing: 12.10.2010
(51) Int. Cl.: F16B 37/12

(54) **Insert of metallic material to be installed in thermoplastic and thermosetting materials**
Metallischer Einsatz für thermoplastische und duroplastische Materialien
Insert métallique pour des matières thermoplastiques et thermodurcissables

(30) Priority: 22.10.2009 IT TO20090152 U
(43) Date of publication of application: 27.04.2011
(73) Proprietor: FAVATA'S.n.c., 10044 Pianezza (TO) (IT)
(72) Inventor: Favata', Vincenzo, 10044 Pianezza (TO) (IT)
(74) Representative: Cian, Paolo

(56) References cited:
- DE-A1- 19 654 947
- US-A- 4 531 870
- US-A1- 2005 084 362

## Description

The present invention refers to an insert adapted to be inserted into a plastic material, said insert consisting of a body of a metallic material having a prismatic side surface, wherein at least a circumferential groove is formed on said prismatic side surface. Such an insert is known from US 2005/084 362 A1.

Such an insert is characterized in that a respective longitudinal spline is formed on at least one of the faces of said prismatic side surface, which extends along its directrix, and said circumferential groove intersects said longitudinal spline, said circumferential groove having conical sidewalls.

By virtue of an insert according to such an idea of solution, it is possible to obtain an optimal penetration of the plastic material along the side surface of the insert, by avoiding or reducing at the least any formation of cavities, with the following advantages:
- high extraction and torsional resistance of the insert,
- elimination of leaks for components requiring a sealing to be obtained,
- reduction of costs owing to reduction of scraps, in the case of moulding of the plastic components.

Particular embodiments of the invention are the subject of the dependent claims, the content of which has to be considered as an integrating part of the present disclosure.

Further characteristics and advantages of the invention will appear from the following detailed description, provided only as a non-limitative example with reference to the appended drawings, in which:
- figure 1 is a side elevational and partially sectioned view of an insert according to the invention;
- figure 2 is a plan view of the insert of figure 1;
- figure 3 is a side elevational and partially sectioned view of a second embodiment of the insert according to invention;
- figure 4 is a plan view of the insert of figure 3; and
- figure 5 is a sectioned view of a detail of the insert according to the invention.

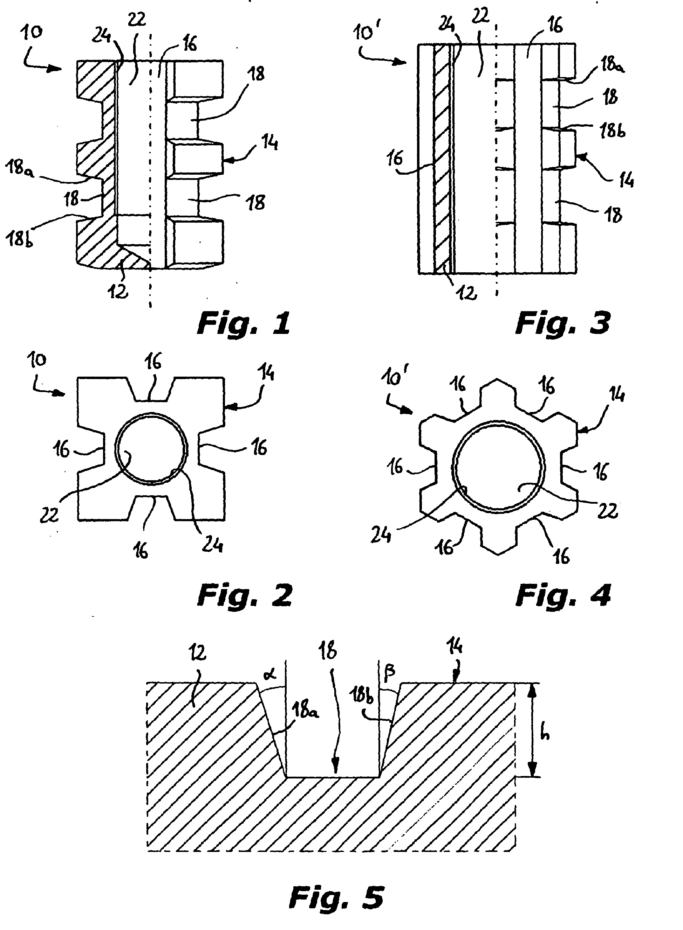

With reference to figures 1 and 2, an insert 10 according to the invention is shown, which is adapted to be inserted into a plastic material of the thermoplastic or thermosetting type. Such an insert 10 consists of a body 12 of a metallic material having a prismatic side surface 14. The material of the body 12 is, for example, an aluminum alloy, brass, bronze, steel, a steel with surface treatments such as galvanizing, brass coating, etc., inox steel, a sinterized iron based material, a magnesium based alloy, etc.

Insertion of the insert in the plastic material may be carried out directly during the moulding process of a piece of plastic material, or after manufacturing of the piece of plastic material, by heating such a piece (for example by ultrasounds) so as to soften it in order to allow the insert to be inserted into the plastic material.

A respective longitudinal spline 16 is formed at least on one face of the prismatic side surface 14 of the insert, which extends along its directrix. The cross-section of said longitudinal spline is, for example, square, rectangular, trapezoidal, etc., and the depth of the spline can vary as a function of the size of the cross-section of the insert. In the example of figures 1 and 2, the prismatic side surface 14 has four faces, on each of which a respective longitudinal spline 16 is formed.

At least one circumferential groove 18 is formed on the prismatic side surface 14 of the insert, which intersects the longitudinal splines 16. In the example of figures 1 and 2, a pair of circumferential grooves are formed on the prismatic side surface 14 of the insert, each of which is arranged close to a respective end of the body 12 of the insert.

The circumferential groove 18 has a trapezoidal cross-section, and has therefore conical sidewalls 18a, 18b. Figure 5 shows a detail view of a portion of the body 12 of the insert, according to a radial cross-section. As it can be clearly seen in such a figure, the sidewalls 18a, 18b of the groove have respective slant angle α, β with respect to the perpendicular to the central axis of the body of the insert. Preferably, the slant angle α, β of the walls of the groove is in the range from 3° to 60°, and it depends also on the depth h of the groove.

Such a configuration of the grooves allows an optimal penetration of the plastic material to be achieved, and therefore an optimal filling up of the grooves during the process of insertion of the insert into the plastic material. In fact, conicity of the walls of the grooves promotes ejection of air contained in them when they are filled up by the plastic material.

Therefore, the plastic material penetrates the grooves so as to fill them up completely, so as to copy tangentially the sidewalls 18a, 18b and the bottom of the grooves, as well as the side surface 14 of the insert adjacent to them. This allows the extracting load of the insert for traction and torsion test to be optimized, so that an optimal anchoring of the insert can be obtained. Lacking of any cavity between the insert and the plastic material allows leaks to be eliminated for components requiring a sealing.

In particular, the insert 10 is a bush, and it has therefore a central through or dead hole 22, provided or not by a thread 24.

Preferably, the insert according to the invention is formed from a cold and/or hot drawn bar; the longitudinal splines 16 are formed during the drawing step of the bar. Thr circumferential grooves 18 and the inner thread 24 are instead formed by turning.

The prismatic side surface 14 of the insert of figures 1 and 2 has a square cross-section. However, the insert may have a poligonal cross-section with a different number of sides, preferably in the range from 3 to 10.

A second example of the insert according to the invention, indicated 10' in its whole, is shown in figures 3 and 4. Such an insert differs from the previous one in that it has an hexagonal cross-section, and it has a through hole. The elements corresponding to those of the previous example have been indicated by the same numeral references, and they will not be further described. Also the insert 10' comprises a plurality of longitudinal splines 16, each of which is formed on a respective face of the prismatic side surface 14 of the insert, as well as a pair of circumferential grooves 18, each of which is arranged close to a respective end of the body 12 of the insert. The circumferential grooves 18 have conical sidewalls.

By virtue of the above described inserts, it is possible to obtain an optimal penetration of the plastic material along the side surface of the insert, by avoiding or reducing at the least any formation of cavities, with the following advantages:
- high extraction and torsional resistance of the insert,
- elimination of leaks for components requiring a sealing to be obtained,
- reduction of costs owing to reduction of scraps, in the case of moulding of the plastic components.

## Claims

1. Insert (10; 10') adapted to be inserted into a plastic material, said insert consisting of a body (12) of a metallic material having a prismatic side surface (14), wherein at least a circumferential groove (18) is formed on said prismatic side surface **characterized in that** a respective longitudinal spline (16) is formed on at least one of the faces of said prismatic side surface, which extends along its directrix, and wherein said circumferential groove (18) is formed so as to intersect said longitudinal spline, said circumferential groove having conical sidewalls (18a, 18b).

2. Insert according to claim 1, wherein the sidewalls of the groove have a slant with respect to the perpendicular to the central axis of the body of the insert, in a range from 3° and 60°.

3. Insert according to claim 1 or 2, wherein said longitudinal spline is formed by drawing, while said circumferential groove is formed by turning.

4. Insert according to any one of the preceding claims, comprising a plurality of said longitudinal splines, each of which is formed on a respective face of the prismatic side surface of the insert, as well as a pair of said circumferential grooves, each of which is arranged close to a respective end of the body of the insert.

5. Insert according to any one of the preceding claims, in which said prismatic side surface has a poligonal cross-section with a number of sides in the range from 3 to 10.

6. Insert according to any one of the preceding claims, in which said insert is a bush provided with a central hole (22).

7. Insert according to claim 6, in which said central hole has a thread (24).

## Patentansprüche

1. Einsatzelement (10, 10'), das in Kunststoff eingebettet werden kann und aus einem Körper (12) aus metallischem Werkstoff besteht, der eine prismatische Seitenwand (14) hat, in die wenigstens eine umlaufende Nut (18) eingearbeitet ist, **dadurch gekennzeichnet, dass** in wenigstens eine Fläche der prismatischen Seitenwand (14) eine Längsnut (16) eingearbeitet ist, die sich entlang der Direktrix erstreckt, wobei die umlaufende Nut (18) so ausgebildet ist, dass sie die Längsnut (16) schneidet und konische Seitenflächen (18a, 18b) hat.

2. Einsatzelement nach Anspruch 1, **dadurch gekennzeichnet, dass** die Seitenflächen der Nut zur Achsnormalen der Mittelachse des Körpers des Einsatzelementes eine Neigung zwischen 3° und 60° haben.

3. Einsatzelement nach Anspruch 1 oder 2, **dadurch gekennzeichnet, dass** die Längsnut durch Ziehen hergestellt ist, während die umlaufende Nut durch Drehbearbeitung eingearbeitet ist.

4. Einsatzelement nach einem der vorhergehenden Ansprüche mit mehreren Längsnuten, von denen jede in eine Fläche der prismatischen Seitenwand des Einsatzelementes eingearbeitet ist, sowie mit einem Paar umlaufender Nuten, die nahe am jeweiligen Ende des Körpers des Einsatzelementes liegen.

5. Einsatzelement nach einem der vorhergehenden Ansprüche, **dadurch gekennzeichnet, dass** die prismatische Seitenwand einen polygonalen Querschnitt hat, wobei zwischen 3 und 10 Seitenflächen vorgesehen sind.

6. Einsatzelement nach einem der vorhergehenden Ansprüche, **dadurch gekennzeichnet, dass** das Einsatzelement als Buchse mit Mittelbohrung ausgebildet ist.

7. Einsatzelement nach Anspruch 6, **dadurch gekennzeichnet, dass** die Mittelbohrung ein Gewinde (24) aufweist.

## Revendications

1. Insert (10, 10') adapté pour être inséré dans une matière plastique, ledit insert comprenant un corps (12) en un matériau métallique ayant une surface latérale prismatique (14), au moins une rainure circonférentielle (18) étant formée sur ladite surface latérale prismatique, **caractérisé en ce qu'**une cannelure longitudinale respective (16) est formée sur au moins une des faces de ladite surface latérale prismatique, qui s'étend le long de sa directrice, et dans lequel au moins une rainure circonférentielle (18) est formée de façon à couper ladite cannelure longitudinale, ladite rainure circonférentielle ayant des parois latérales coniques (18a, 18b).

2. Insert selon la revendication 1, dans lequel les parois latérales de la rainure ont une inclinaison par rapport à la perpendiculaire à l'axe central du corps de l'insert, située dans une plage allant de 3° à 60°.

3. Insert selon la revendication 1 ou la revendication 2, dans lequel ladite cannelure longitudinale est formée par étirage, tandis que ladite rainure circonférentielle est formée par tournage.

4. Insert selon l'une quelconque des revendications précédentes, comprenant une pluralité desdites cannelures longitudinales, dont chacune est formée sur une face respective de la surface latérale prismatique de l'insert, ainsi qu'une paire desdites rainures circonférentielles, dont chacune est disposée à proximité d'une extrémité respective du corps de l'insert.

5. Insert selon l'une quelconque des revendications précédentes, dans lequel ladite surface latérale prismatique présente une section transversale polygonale avec un nombre de côtés situé dans l'intervalle allant de 3 à 10.

6. Insert selon l'une quelconque des revendications précédentes, dans lequel ledit insert est une douille munie d'un trou central (22).

7. Insert selon la revendication 6, dans lequel ledit trou central présente un filetage (24).
